# EUROPEAN PATENT APPLICATION

(11) **EP 4 787 682 A1**
(43) Date of publication of application: **05.08.2026**
(21) Application number: 24872323.1
(22) Date of filing: 25.09.2024
(51) Int. Cl.: H02K 15/02

(54) **METHOD AND DEVICE FOR PRODUCING LAMINATION CORE**

(30) Priority: 25.09.2023 JP 2023161774
(71) Applicant: NHK Spring Co., Ltd., Yokohama-shi, Kanagawa 236-0004 (JP)
(72) Inventor: KAWARABAYASHI, Tomohiro, Yokohama-shi, Kanagawa 236-0004 (JP)
(74) Representative: Oppermann, Frank
(86) International application number: PCT/JP2024/034268
(87) International publication number: WO 2025/070537

(57) **Abstract**

Provided is a method and a device for producing a lamination core, capable of predicting generation of weld cracks to further improve suppressing the weld cracks. The method for manufacturing a lamination core 1 in which a plurality of core pieces 7 are laminated, pressurizes and welds the lamination core 1 in a laminating direction, and controls accumulation of a compression amount of the lamination core 1 due to the pressurizing, a shrinkage amount at a welded portion of the lamination core 1 in the laminating direction, and a spring-back amount of the lamination core 1 due to release of the pressurizing to be within a compression limit of the lamination core 1.

## Description

### FIELD OF THE INVENTION

The present invention relates to a method and an apparatus for producing a lamination core in which a plurality of core pieces are laminated.

### BACKGROUND OF THE INVENTION

As a conventional method for producing a lamination core, there is one disclosed in Patent Literature 1. This producing method, for example, welds a lamination core while the lamination core obtained by pressurizing with a first load is pressurized with a second load equal to or less than the first load.

With this welding, spring-back in a laminating direction of the lamination core is reduced to suppress cracking of weld beads.

This producing method, however, does not take a relationship among compression of the lamination core due to the pressurizing at the time of the welding, shrinkage of the lamination core due to cooling after the welding, and spring-back due to release of the pressurizing into consideration. With this, there is a limit on suppressing weld cracks that are the cracking of the weld beads.

### CITATION LIST

### PATENT LITERATURE

PATENT LITERATURE 1: JP 7078424 B

### SUMMARY OF THE INVENTION

### PROBLEMS TO BE SOLVED BY THE INVENTION

The problem to be solved is that there is a limit on suppressing weld cracks of a lamination core.

### MEANS FOR SOLVING THE PROBLEM

The present invention provides a method for producing a lamination core in which a plurality of core pieces are laminated, pressurizing and welding the lamination core in a laminating direction, and controlling accumulation of a compression amount of the lamination core due to the pressurizing, a shrinkage amount at a welded portion of the lamination core in the laminating direction, and a spring-back amount of the lamination core due to release of the pressurizing to be within a compression limit of the lamination core.

The present invention also provides a device for producing a lamination core, including a pressurizing mechanism that pressurizes a lamination core, in which a plurality of core pieces are laminated, in a laminating direction, a welding mechanism that welds the pressurized lamination core in the laminating direction, and a control unit that controls the pressurizing mechanism so that accumulation of a compression amount of the lamination core due to the pressurizing, a shrinkage amount at a welded portion of the lamination core in the laminating direction, and a spring-back amount of the lamination core due to release of the pressurizing is within a compression limit of the lamination core.

### EFFECT OF THE INVENTION

The present invention improves suppressing weld cracks of a lamination core.

### BRIEF DESCRIPTION OF THE DRAWINGS

[FIG. 1] FIG. 1 is a perspective view of a lamination core according to an embodiment 1 of the present invention.
[FIG. 2] FIG. 2 is a plan view of the lamination core of FIG. 1.
[FIG. 3] FIG. 3 is an enlarged photograph illustrating weld cracks in a lamination core in a case of a producing method of the embodiment 1 is not applied.
[FIG. 4] FIG. 4 is an enlarged photograph illustrating shrinkage of the lamination core of FIG. 1 due to welding.
[FIG. 5] FIG. 5 is an enlarged photograph illustrating pressurizing at an unwelded portion of the lamination core of FIG. 1.
[FIG. 6] FIG. 6 is a graph illustrating a height state of the lamination core including welded portions and unwelded portions.
[FIG. 7] FIG. 7 is a plan view illustrating a surface pressure state of the pressurizing at the welded portions and the unwelded portions.
[FIG. 8] FIG. 8 is a graph illustrating a relationship among a compression limit, a compression amount at the time of pressurizing, a shrinkage amount due to welding, and a spring-back amount due to release of the pressurizing of the lamination core.
[FIG. 9] FIG. 9 is a schematic view illustrating a producing device for a lamination core of the embodiment 1.
[FIG. 10] FIG. 10 is a schematic view illustrating the producing device of FIG. 9 at the time of the welding.
[FIG. 11] FIG. 11 is an enlarged side view of part of a producing device according to an embodiment 2.
[FIG. 12] FIG. 12 is an enlarged sectional view of part of the producing device of FIG. 11.

### EMBODIMENT FOR CARRYING OUT THE INVENTION

The present invention accomplishes the object to improve suppressing weld cracks of a lamination core by a producing method and a producing device that control accumulation of a compression amount of the lamination core due to pressurizing, a shrinkage amount at a welded portion of the lamination core in the laminating direction and a spring-back amount of the lamination core due to release of the pressurizing to be within a compression limit of the lamination core.

Namely, the method for producing a lamination core 1 is a producing method for the lamination core 1 in which a plurality of core pieces 7 are laminated. In this producing method, the lamination core 1 is pressurized and welded in a laminating direction, and the pressurizing is released. At this time, accumulation of a compression amount of the lamination core 1 due to the pressurizing, a shrinkage amount at a welded portion of the lamination core 1 in the laminating direction, and a spring-back amount of the lamination core 1 due to release of the pressurizing is controlled to be within a compression limit of the lamination core 1.

The welding is sequentially performed at a plurality of positions in a circumferential direction with respect to the lamination core 1. The accumulation of the compression amount, the shrinkage amount, and the spring-back amount of the lamination core 1 may be within the compression limit of the lamination core 1 at last time of the welding sequentially performed at the plurality of the positions.

As an embodiment, a load of the pressurizing may be reduced so that the accumulation of the compression amount, the shrinkage amount, and the spring-back amount of the lamination core 1 is within the compression limit of the lamination core 1.

As another embodiment, the pressurizing may be performed by a pressure plate 27. In this case, the pressurizing position of the pressure plate 27 is fixed so that the accumulation of the compression amount, the shrinkage amount, and the spring-back amount of the lamination core 1 is within the compression limit of the lamination core 1.

As still another embodiment, the pressurizing may be performed by the pressure plate 27 and a pusher 33. In this case, the pusher 33 follows a gap S between the lamination core 1 and the pressure plate 27 due to shrinkage of the lamination core 1 generated at the welded portion in the laminating direction, to pressurize the lamination core 1 in the gap S as well as the pressurizing by the pressure plate 27.

A producing device 15 is provided with a pressurizing mechanism 17, a welding mechanism 19, and a control unit 21. The pressurizing mechanism 17 pressurizes the lamination core 1 in the laminating direction. The welding mechanism 19 welds the pressurized lamination core 1 in the laminating direction. The control unit 21 controls a load of the pressurizing by the pressurizing mechanism 17 so that the accumulation of the compression amount, the shrinkage amount, and the spring-back amount of the lamination core 1 is within the compression limit of the lamination core 1.

The welding mechanism 19 may sequentially perform the welding at the plurality of the positions of the lamination core 1 in the circumferential direction. In this case, the control unit 21 may control the load so that the accumulation of the compression amount, the shrinkage amount, and the spring-back amount of the lamination core 1 is within the compression limit of the lamination core 1 at the last time of the welding at the plurality of the positions sequentially performed on the lamination core 1.

In one embodiment, the control unit 21 may reduce the load during the pressurizing so that the accumulation of the compression amount, the shrinkage amount, and the spring-back amount of the lamination core 1 is within the compression limit of the lamination core 1.

In another embodiment, the pressurizing mechanism 17 may include the pressure plate 27. In this case, the control unit 21 may fix the pressurizing position of the pressure plate so that the accumulation of the compression amount, the shrinkage amount, and the spring-back amount of the lamination core 1 is within the compression limit of the lamination core 1.

Further, as another embodiment, the producing device 15 may include the pressure plate 27, the welding mechanism 19, and the pusher 33. The pusher 33 is supported on the pressure plate 27 movably in the laminating direction, to follow the gaps S between the pressure plate 27 and the lamination core 1 and pressurize the lamination core 1 in the gap S as well as the pressurizing by the pressure plate 27.

### EMBODIMENT 1

### [Lamination core]

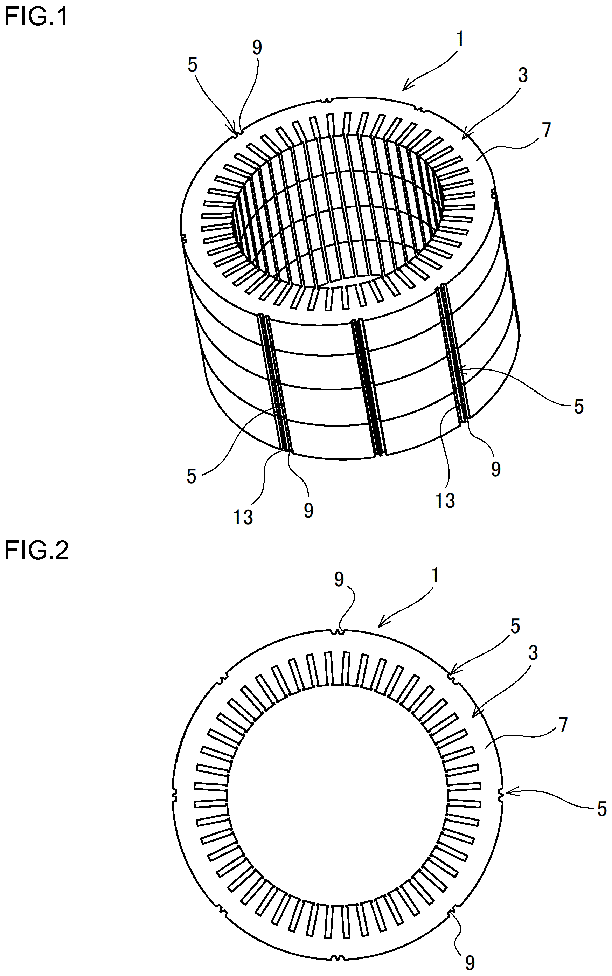

FIG. 1 is a perspective view of a lamination core according to the embodiment 1 of the present invention. FIG. 2 is a plan view of the lamination core of FIG. 1. In addition, a laminating direction, a circumferential direction, a radial direction, and an axial direction mean a laminating direction, a circumferential direction, a radial direction, and an axial direction of a lamination core, respectively in the following explanation.

A lamination core 1 of FIGS. 1 and 2 is a stator core of a rotating electric machine. The lamination core 1 is one in which a plurality of core pieces 7 made of annular plate materials are unified with welded portions 5 on an outer peripheral portion in a state that the core pieces are stacked in the axial direction. A state that the core pieces 7 are stacked before forming the welded portions 5 includes a state that the core pieces 7 are joined by caulking or a state that the core pieces 7 are not joined without caulking or the like, and should be a state that the core pieces 7 are stacked. The core pieces 7 are formed by being punched out, for example, from an electromagnetic steel plate. In addition, the core pieces 7 may be formed by laser fusion processing or wire cut processing instead of the punching-out. The lamination core 1 may be a rotor core. In this case, the welded portions may be formed in an inner peripheral portion, an outer peripheral portion, magnet-mounting holes, or the like of the rotor core.

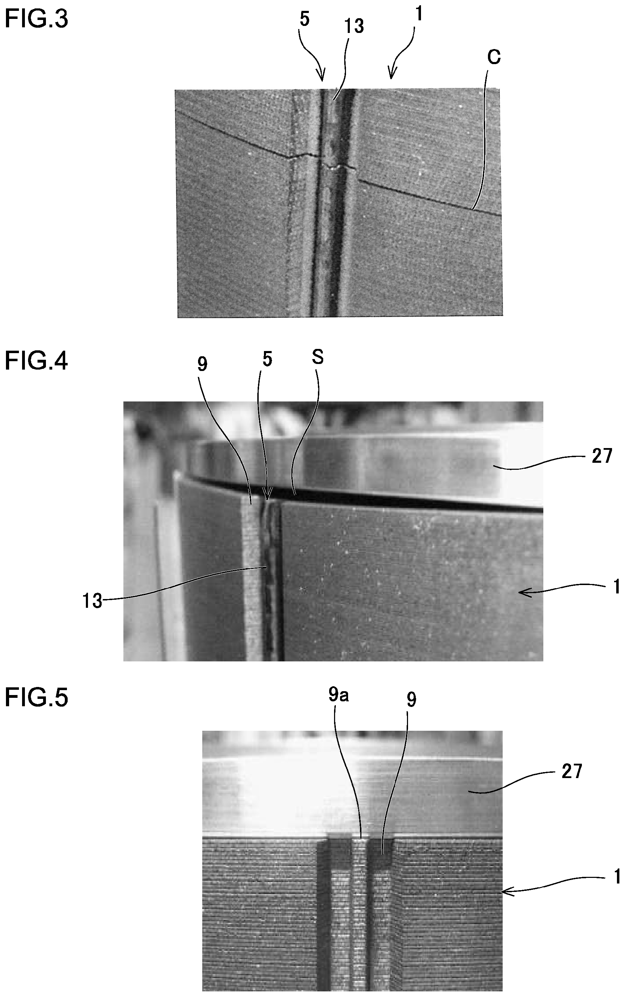

The welded portions 5 are formed along the laminating direction, and are formed at eight positions in the circumferential direction as illustrated in FIG. 3 in the embodiment. The number of the welded portions 5 is not limited to eight, and may be increased or decreased with respect to eight. Each welded portion 5 is formed in a recess 9 (see FIG. 4) in the radial direction of an outer periphery of the lamination core 1. A weld projection 9a (see FIG. 5) is located in the recess 9 before welding. The welded portion 5 has a weld bead 13 formed by welding linearly in the laminating direction with respect to the weld projection 9a. It should be noted that the welding should be performed at a place where the welding of the lamination core 1 is scheduled, and is not limited to the welding using the recess 9 or the weld projection 9a.

The lamination core 1 is welded by a producing method of the present embodiment, thereby suppressing weld cracks of the welded portions 5 (weld beads 13). FIG. 3 is an enlarged photograph illustrating a weld crack C in the lamination core 1 in a case that the producing method of the present embodiment is not applied. A mechanism for generating the weld crack C will be explained.

### [Mechanism for generating weld cracks]

FIG. 4 is an enlarged photograph illustrating shrinkage by the welding of the lamination core of FIG. 1. FIG. 5 is an enlarged photograph illustrating pressurizing at an unwelded portion of the lamination core of FIG. 1.

When the lamination core 1 is welded, the lamination core is supported on a support jig to be explained later in an unwelded state, and is pressurized in the laminating direction by a pressure ring 27 that is a pressure plate of the present embodiment as illustrated in FIGS. 4 and 5. With this pressurizing, the lamination core 1 is compressed and shrunk in the laminating direction. In this state, the welding such as TIG welding or laser welding is performed at the weld projections 9a in the recesses 9 in the laminating direction, to form the weld beads 13 in the welded portions 5.

This welding is sequentially performed at a plurality of positions in the circumferential direction, for example, at eight positions. The welding at the plurality of the positions is sequentially performed for each pair of the weld projections 9a located on both sides in the radial direction with respect to a center of the lamination core 1. The welding, however, may be sequentially performed one by one.

Shrinkage is generated in the laminating direction at the welded portions 5 that are the welded positions according to cooling, and the lamination core 1 is shrunk in the laminating direction at the shrinkage portions as illustrated in FIG. 4. Accordingly, an upper surface of the lamination core 1 is separated by gaps S with respect to the pressure ring 27 at these portions. On the other hand, unwelded portions are still pressurized by the pressure ring 27 in the laminating direction as illustrated in FIG. 5. Accordingly, surface pressure of the lamination core 1 by the pressure ring 27 is increased at the unwelded portions.

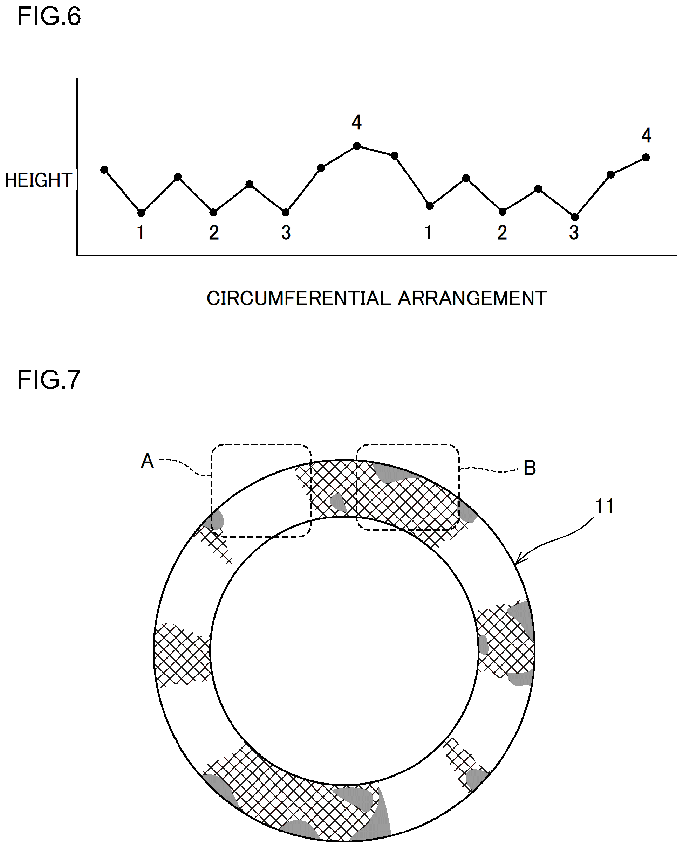

FIG. 6 is a graph illustrating a height state of the lamination core 1 including the welded portions and the unwelded portions. FIG. 7 is a plan view illustrating a surface pressure state of the pressurizing at the welded portions and the unwelded portions.

The height state that is a dimensional state in the laminating direction of the lamination core 1 including the welded portions and the unwelded portions in FIGS. 4 and 5 is as illustrated in FIG. 6. FIG. 6 illustrates a state that the welding is performed up to a third pair of the positions in the welding to be sequentially performed to four pairs of the eight positions. In this state, height is low at each welded portion and height is high at a last fourth pair of unwelded portions. In FIG. 6, the reference numerals indicate welding order, and the first pair of the positions are 1, the second pair of the positions are 2, the third pair of the positions are 3, and the fourth pair of the positions are 4.

Change in surface pressure according to change in height of the lamination core 1 is as illustrated in FIG. 7. In FIG. 7, white portions A are welded portions and are low in surface pressure. Dark portions are unwelded portions and high in surface pressure. Cross-hatchings are portions other than the welded portions and the unwelded portions. The welding portions A are shrunk by the welding and are lower than the unwelded portions B in the surface pressure.

In this way, a shrunk amount (compression amount) due to compression at the time of the pressurizing of the lamination core 1 increases as the surface pressure increases, so that accumulation of the compression amount of the lamination core 1 and a shrunk amount (shrinkage amount) due to the shrinkage of the weld bead 13 at that portion gradually increases along with advance of the welding (decrease of the unwelded portions). Then, it is found that, if a spring-back amount when the pressurizing of the lamination core 1 is released subtracted from the accumulation of the compression amount and the shrinkage amount of the lamination core 1, i.e., accumulation of the compression amount, the shrinkage amount, and the spring-back amount of the lamination core 1 exceeds a compression limit of the lamination core 1, weld cracks are generated. The spring-back amount is size of a spring-back that is a phenomenon in which the lamination core 1 tends to expand in the laminating direction when the pressurizing is released. The compression limit is a state that the lamination core 1 is compressed in the laminating direction to bring the core pieces 7 into close contact with each other, i.e. a limit that the lamination core 1 is allowed to be compressed.

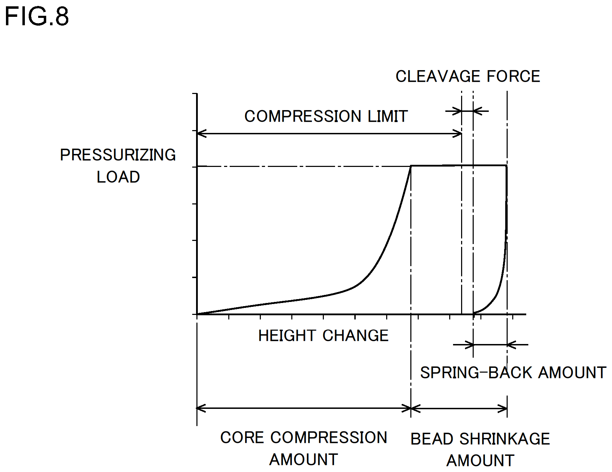

FIG. 8 is a graph illustrating the relationship among the compression limit, the compression amount at the time of the pressurizing, the shrinkage amount due to the welding, and the spring-back of the lamination core.

In FIG. 8, an ordinate represents the load during the pressurizing of the lamination core 1 by the pressure ring 27, and an abscissa represents a height variation at the welded portions.

In the lamination core 1, if the accumulation of the compression amount of the lamination core 1 (the core compression amount in FIG. 8) and the shrinkage amount of the weld bead 13 at that portion (the bead shrinkage amount in FIG. 8) and the spring-back amount exceeds the compression limit of the lamination core 1, cleavage force acts on the weld bead 13 for separating the core pieces 7 from each other by that exceeding amount as illustrated in FIG. 8. As a result, cracks are generated in the weld bead 13, to lead to weld cracks.

In the producing method of the present embodiment, generation of such weld cracks is predicted, to improve suppressing weld cracks.

### [Method and apparatus for producing lamination core]

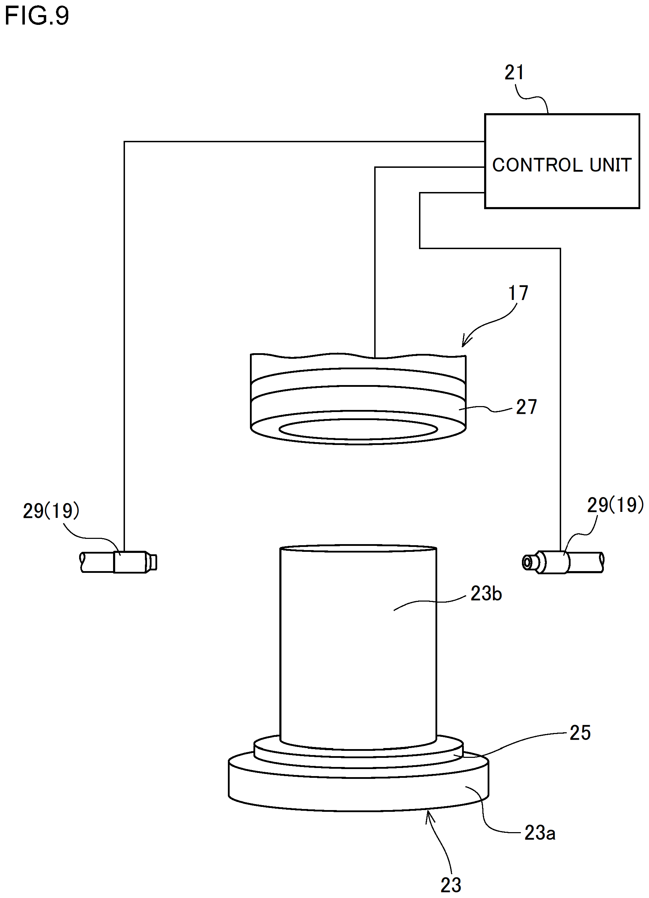

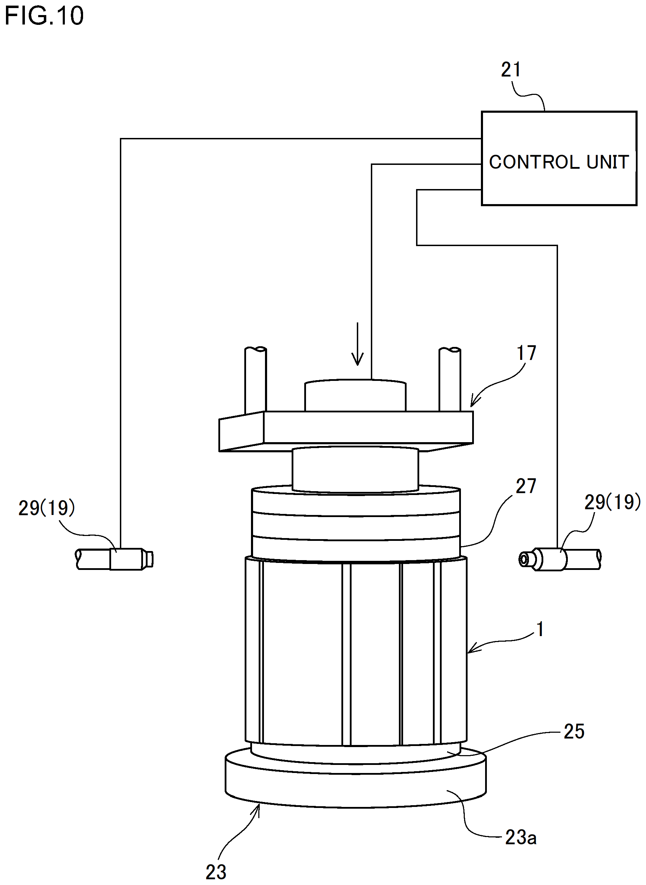

FIG. 9 is a schematic view illustrating a device 15 for producing a lamination core. FIG. 10 is a schematic view illustrating the producing device 15 during the welding.

The producing method of the present embodiment is realized using the producing device 15. The producing method, however, may be implemented without using the producing device 15. As illustrated in FIGS. 9 and 10, the producing device 15 includes a pressurizing mechanism 17, a welding mechanism 19, and a control unit 21.

The pressurizing mechanism 17 is to pressurize the lamination core 1 in the laminating direction. The pressurizing mechanism 17 is provided with a support jig 23, a pressure-receiving ring 25, and the pressure ring 27 as a pressure plate. The support jig 23 includes a core metal 23b to support the lamination core 1 on a base 23a. On the base 23a, the pressure-receiving ring 25 is provided around the core metal 23b.

The pressure-receiving ring 25 contacts and supports a lower surface of the lamination core 1 supported by the support jig 23. The pressure ring 27 is a component provided in a pressing machine or the like that is not illustrated, to pressurize the upper surface of the lamination core 1 together with the pressure-receiving ring 25 for the lower surface in the laminating direction. The pressure ring 27 does not release the load of the pressurizing until the welding process is completed, and follows a rotational direction of the lamination core 1. In addition, the pressure plate is not limited to the ring-shaped pressure ring 27, and should have a plate-like portion capable of pressurizing the lamination core 1.

The pressure-receiving ring 25 and the pressure ring 27 are rotationally drivable, and position the lamination core 1 in the pressurized state in the circumferential direction with respect to the welding mechanism 19 by this rotationally driving.

The welding mechanism 19 welds the pressurized lamination core 1 in the laminating direction. In the welding mechanism 19, laser irradiation units 29 are disposed on respective sides of the lamination core 1 supported by the pressurizing mechanism 17. With this, the laser irradiation units 29 is capable of welding each pair of the weld projections 9a of the lamination core 1 on the pressurizing mechanism 17. In addition, the welding mechanism 19 is not limited to laser welding and may be one to perform other welding. For example, if the welding mechanism 19 performs TIG welding or the like, a welding torch may be provided instead of the laser irradiation units 29.

The control unit 21 is a computer being provided with a CPU, a ROM, a RAM and the like, and a welding program for the lamination core 1 is installed into the control unit. In addition, the welding program for the lamination core 1 may be stored in a portable recording medium as the welding program for a lamination core 1.

The welding program for the lamination core 1 causes a computer to realize a welding control function and a pressurizing control function.

The welding control function pressurizes the lamination core 1 in the laminating direction with a set load, and operates the welding mechanism 19 to perform the welding in the laminating direction with respect to the lamination core 1.

The pressurizing control function controls the load of the pressurizing by the pressurizing mechanism 17 so that the accumulation of the compression amount, the shrinkage amount, and the spring-back amount of the lamination core 1 is within the compression limit of the lamination core 1. In the present embodiment, the load of the pressurizing by the pressurizing mechanism 17 is controlled so that the accumulation of the compression amount, the shrinkage amount, and the spring-back amount of the lamination core 1 is within the compression limit of the lamination core 1 at the last time of the welding, for example, at the fourth pair in the four pairs of the eight positions, sequentially performed at the plurality of the positions in the circumferential direction with respect to the lamination core 1.

The control of the load is a reduction in the load in the present embodiment. This reduction of the load is sufficient as long as the accumulation of the compression amount, the shrinkage amount, and the spring-back amount of the lamination core 1 is within the compression limit of the lamination core 1 at the time of the last welding, and the reduction may be performed one or more times during the advance of the welding sequentially performed at the plurality of the portions. The load is reduced during the pressurizing while advancing the welding sequentially performed at the plurality of the positions, to suppress increase in the compression amount of the lamination core 1 according to the advance of the welding. The reduction of the load may be performed whenever the welding is performed for the plurality of the positions.

In the producing method using the producing device 15, when the lamination core 1 is pressurized and welded in the laminating direction, the pressurizing is adjusted so that the accumulation of the compression amount in the laminating direction by the pressurizing of the lamination core 1 and the shrinkage amount in the laminating direction due to the welding and the spring-back amount at the time of releasing the pressurizing is within the compression limit of the lamination core 1.

When the lamination core 1 is pressurized, the lamination core 1 is supported on the support jig 23 of FIG. 9 first, and the lamination core 1 is disposed on the pressure-receiving ring 25. The lamination core 1 is pressurized from the upper surface thereof with the set load by the pressure ring 27 as illustrated in FIG. 10.

The set load is determined so that the accumulation of the compression amount, the shrinkage amount, and the spring-back amount of the lamination core 1 is within the compression limit of the lamination core 1 at least in the beginning, in the present embodiment, in the first pair of the welding. The compression amount, the shrinkage amount, and the spring-back amount may be obtained in advance by experiments or the like.

The first pair of the weld projections 9a of the lamination core 1 on the pressurizing mechanism 17 are positioned to the laser irradiation units 29 in the circumferential direction. Then, the laser irradiation units 29 irradiate the first pair of the weld projections 9a with a laser beam entirely in the laminating direction. As a result, the first pair of the welding is performed on the lamination core 1.

According to this welding, the shrinkage occurs in the weld beads 13 in the laminating direction. In the shrinkage portions, gaps S occur between the pressure ring 27 and the lamination core 1.

In this way, when the first pair of the welding is completed, the surface pressure due to the pressurizing increases at the other unwelded portions. Accordingly, the compression amount is increased at the unwelded portion of the lamination core 1 by comparison with that before the first pair of the welding. The accumulation of the increased compression amount of the lamination core 1, the shrinkage amount due to the first pair of the welding, and the spring-back amount of the lamination core 1 due to the release of the pressurizing is within the compression limit according to the setting of the load of the pressurizing as mentioned above.

Then, the welding is also performed at the next second pair of the weld projections 9a so that the accumulation of the compression amount, the shrinkage amount, and the spring-back amount of the lamination core 1 to be increased is within the compression limit.

For example, if it is predicted that, before the welding at the next second pair of the weld projections 9a, the accumulation of the compression amount, the shrinkage amount, and the spring-back amount of the lamination core 1 to be increased by this welding exceeds the compression limit, the load of the pressurizing is reduced before the second pair of the welding. The compression amount, the shrinkage amount, and the spring-back amount predicted at this time may be obtained in advance by experiments or the like as in the case of determining the set load.

Alternatively, the load of the pressurizing may be reduced according to comparing the accumulation of the compression amount, the shrinkage amount, and the spring-back amount at the completion of the first pair of the welding with a threshold value. Alternatively, the load may be automatically reduced according to completion of each welding as long as the surface pressure is maintained necessary for the welding.

The automatically reducing of the load may be performed, for example, to reduce the surface pressure of the lamination core 1 expected to be high according to the completion of the welding. Namely, if the lamination core 1 is welded while being pressurized with a constant load, the surface pressure of the pressurizing at the welded portions decreases due to the shrinkage of the weld bead 13, and the surface pressure at the unwelded portions becomes relatively high. Since the compression amount of the lamination core 1 increases at the unwelded portions as the surface pressure increases, this surface pressure expected to be high should be reduced.

A reduction ratio of the load may be about 99% to 45% with respect to the initial load of the pressurizing of the lamination core 1. According to this reduction of the load, for example, the surface pressure at the beginning of the pressurizing is maintained at the unwelded portions.

It should be noted that the pressurizing position of the pressure ring 27 may be fixed to a specified value. The pressurizing position is a position of the pressure ring 27 in the laminating direction of the lamination core 1. With this fixing, it suppresses increase in the surface pressure at the unwelded portions.

Thereafter, similar to the above, the pressurizing and the welding of the lamination core 1 are performed at the third pair and a subsequent pair of the positions, to control the accumulation of the compression amount, the shrinkage amount, and the spring-back amount of the lamination core 1 to be within the compression limit of the lamination core 1 until the last fourth pair of the welding is completed.

It, therefore, suppresses cleavage force acting between the core pieces 7 by the spring-back or the like of the lamination core 1, to suppress the weld cracks of the weld beads 13.

In the present embodiment, the load at the time of the pressurizing is reduced so that the accumulation of the compression amount, the shrinkage amount, and the spring-back amount of the lamination core 1 is within the compression limit, so that it suppresses increase in the compression amount of the lamination core 1 according to the advance of the welding, to more surely suppress the weld cracks of the weld beads 13.

### EMBODIMENT 2

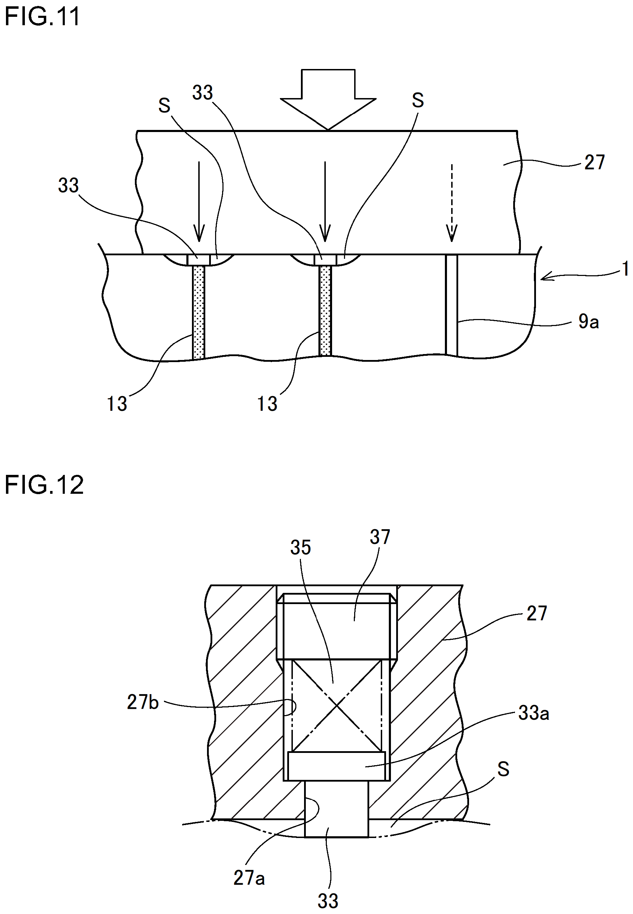

FIG. 11 is an enlarged side view of part of a producing device according to the embodiment 2. FIG. 12 is an enlarged sectional view of part of the producing device of FIG. 11. The second embodiment is in common with the embodiment 1 in the basic structure, and components being the same as or corresponding to those of the embodiment 1 are represented with the same reference numerals, to omit redundant description.

In the embodiment 2, a pusher 33 follows a gap S between a lamination core 1 and a pressure ring 27 due to shrinkage of the lamination core 1 generated at a welded portion in the laminating direction. With this, the lamination core 1 is pressurized by the pusher 33 in the gap S as well as the pressurizing by the pressure ring 27. For this, a producing device 15 of the present embodiment includes a surface-pressure-holding mechanism 31 in addition to the pressurizing mechanism 17, the welding mechanism 19, and the control unit 21. In addition, the following to the gap S is to follow the gap S in the laminating direction and does not matter in the circumferential direction.

As illustrated in FIGS. 11 and 12, the surface-pressure-holding mechanism 31 is provided with pushers 33 and compression springs 35. In addition, hydraulic cylinders, pneumatic cylinders, solenoids or the like may be used instead of the compression springs 35.

The pusher 33 is movably supported in the laminating direction on the pressure ring 27. The pusher 33 of the present embodiment is a shaft-shaped member being integrally provided with a spring seat 33a. In addition, the shape of the pusher 33 is not particularly limited as long as the pusher follows the gap S.

The pusher 33 passes through a through-hole 27a of the pressure ring 27 to be allowed to be projected toward the lamination core 1. The through-hole 27a communicates with a spring accommodation hole 27b. A spring seat 33a is disposed in the spring accommodation hole 27b. A compression spring 35 is disposed in the spring accommodation hole 27b. The compression spring 35 is disposed between a nut 37 screwed to an upper side of the accommodation hole 27a and the spring seat 33a.

This surface-pressure-holding mechanism 31 is disposed so as to correspond to any one or more or all of a plurality of weld portions that are sequentially processed. The surface-pressure-holding mechanism 31 of the present embodiment corresponds to all the weld portions.

When the gap S is generated at the position where the welding is performed according to the shrinkage in the weld bead 13, the surface-pressure-holding mechanism 31 pushes out the pusher 33 toward the lamination core 1 by the compression spring 35 according to the gap S. Accordingly, the pusher 33 follows the gap S to pressurize the lamination core 1 in the gap S.

The present embodiment, therefore, maintains the surface pressure due to the pressurizing at the welded position using the surface-pressure-holding mechanism 31 according to the shrinkage amount in the laminating direction of the lamination core 1, to suppress increase in surface pressure of the entire lamination core 1. In addition, the maintaining of the surface pressure of the surface-pressure-holding mechanism 31 should be performed so that the accumulation of the compression amount, the shrinkage amount, and the spring-back amount of the lamination core 1 at the welded portion is within the compression limit, and it may involve increase in the surface pressure at the unwelded portion in that context.

In this way, the embodiment 2 maintains the surface pressure of the lamination core 1, so that it suppresses increase in the compression amount according to the advance of the welding, to reliably improve suppressing the weld cracks of the weld beads 13.

In addition, the second embodiment also provides the same effects as those of the embodiment 1. In addition, the embodiment 2 may be combined with the embodiment 1.

### DESCRIPTION OF NUMERALS

- 1: Lamination core
- 7: Core piece
- 15: Producing device for lamination core
- 17: Pressurizing mechanism
- 19: Welding mechanism
- 21: Control unit
- 31: Surface-pressure-holding mechanism

## Claims

1. A method for producing a lamination core in which a plurality of core pieces are laminated, comprising:
pressurizing and welding the lamination core in a laminating direction; and
controlling accumulation of a compression amount of the lamination core due to the pressurizing, a shrinkage amount at a welded portion of the lamination core in the laminating direction, and a spring-back amount of the lamination core due to release of the pressurizing to be within a compression limit of the lamination core.

2. The method for producing a lamination core according to claim 1, wherein
the welding is sequentially performed at a plurality of positions in a circumferential direction with respect to the lamination core, and
the accumulation of the compression amount, the shrinkage amount, and the spring-back amount at last time of the welding sequentially performed at the plurality of the portions is controlled to be within the compression limit of the lamination core.

3. The method for producing a lamination core according to claim 1 or 2, further comprising:
reducing a load during the pressurizing so that the accumulation of the compression amount, the shrinkage amount, and the spring-back amount is within the compression limit of the lamination core.

4. The method for producing a lamination core according to claim 1 or 2, wherein
the pressurizing is performed by a pressure plate, and
a pressurizing position of the pressure plate is fixed so that the accumulation of the compression amount, the shrinkage amount, and the spring-back amount is within the compression limit of the lamination core.

5. The method for producing a lamination core according to claim 1 or 2, wherein
the pressurizing is performed by a pressure plate, and
a pusher is caused to follow a gap between the lamination core and the pressure plate due to shrinkage of the lamination core generated at the welded portion in the laminating direction, to pressurize the lamination core in the gap as well as the pressurizing by the pressure plate.

6. A method for producing a lamination core in which a plurality of core pieces are laminated, comprising:
pressurizing and welding the lamination core in a laminating direction;
sequentially performing the welding at a plurality of positions in a circumferential direction with respect to the lamination core; and
reducing a load during the pressurizing while advancing the welding sequentially performed at the plurality of the positions.

7. A method for producing a lamination core in which a plurality of core pieces are laminated, comprising:
welding the lamination core while pressurizing the lamination core a laminating direction using a pressure plate;
sequentially performing the welding at a plurality of positions in a circumferential direction with respect to the lamination core; and
making a pusher follow a gap between the lamination core and the pressure plate due to shrinkage of the lamination core generated at a welded portion in the laminating direction, to pressurize the lamination core in the gap as well as the pressurizing by the pressure plate.

8. A device for producing a lamination core, comprising:
a pressurizing mechanism that pressurizes a lamination core, in which a plurality of core pieces are laminated, in a laminating direction;
a welding mechanism that welds the pressurized lamination core in the laminating direction; and
a control unit that controls a load of the pressurizing by the pressurizing mechanism so that accumulation of a compression amount of the lamination core due to the pressurizing, a shrinkage amount at a welded portion of the lamination core in the laminating direction, and a spring-back amount of the lamination core due to release of the pressurizing is within a compression limit of the lamination core.

9. The device for producing a lamination core according to claim 8, wherein
the welding mechanism sequentially performs the welding at a plurality of positions of the lamination core in a circumferential direction, and
the control unit controls the load so that the accumulation of the compression amount, the shrinkage amount, and the spring-back amount is within the compression limit of the lamination core at last time of the welding sequentially performed at the plurality of the positions.

10. The device for producing a lamination core according to claim 8 or 9, wherein
the control unit reduces the load during the pressurizing so that the accumulation of the compression amount, the shrinkage amount, and the spring-back amount is within the compression limit of the lamination core.

11. The device for producing a lamination core according to claim 8 or 9, wherein
the pressurizing mechanism is provided with a pressure plate to perform the pressurizing, and
the control unit fixes a pressurizing position of the pressure plate so that the accumulation of the compression amount, the shrinkage amount, and the spring-back amount is within the compression limit of the lamination core.

12. A device for producing a lamination core, comprising:
a pressure plate that pressurizes a lamination core, in which a plurality of core pieces are laminated, in a laminating direction;
a welding mechanism that welds the pressurized lamination core in the laminating direction and sequentially performs the welding at a plurality of positions in a circumferential direction; and
a pusher supported on the pressure plate movably in the laminating direction to follow a gap between the lamination core and the pressure plate due to shrinkage of the lamination core generated at the welded portion in the laminating direction, to pressurize the lamination core in the gap as well as the pressurizing by the pressure plate.
